# EUROPEAN PATENT APPLICATION

(11) **EP 0 669 704 A2**
(43) Date of publication of application: **30.08.1995**
(21) Application number: 95200359.8
(22) Date of filing: 15.02.1995
(51) Int. Cl.: H02M 3/335

(54) **Switched-mode power supply for connection to a direct voltage source and for generating at least one regulated d.c. output voltage, and apparatus comprising such a switched-mode power supply**

(30) Priority: 23.02.1994 AT 377/94
(71) Applicant: Philips Electronics N.V., 5621 BA Eindhoven (NL)
(72) Inventor: Sulzer, Norbert, NL-5656 AA Eindhoven (NL)
(74) Representative: van der Kruk, Willem Leonardus

(57) **Abstract**

In a switched-mode power supply (2) comprising a transformer device (11) having a primary side (12) and a secondary side (134), which primary side (12) is arranged in series with a switching device (16) and across which secondary side (13) a pulse-shaped signal (U2) appears, which signal depends on the switching action of the switching device (16) and contains pulses (11, 12) of opposite polarities relative to a constant potential, of which the pulses (11) of a first polarity are rectified in a first rectifier device (22) to form a regulated d.c. output voltage (U3), an undervoltage detection device (31) is connected to the secondary side (13) of the transformer device (11) and comprises a detection circuit (32) adapted to detect the amplitude of those pulses (12) of the pulse-shaped signal (U2) at the secondary side which have the second polarity opposite to the first polarity.

## Description

The invention relates to a switched-mode power supply for connection to a direct voltage source and for generating at least one regulated d.c. output voltage, comprising a transformer device having a primary side and a secondary side, which primary side is connectible to the direct voltage source and is arranged in series with a switching device, and to which secondary side at least a first rectifier device is connected, a pulse-shaped signal appearing across the secondary side, which signal depends on the switching action of the switching device and contains pulses of opposite polarities relative to a constant potential, of which the pulses of a first polarity are rectified in the first rectifier device to form the regulated d.c. output voltage, which is applied to a control device to control the switching action of the switching device, the switched-mode power supply also comprising an undervoltage detection device connected to a point of the power supply which is situated at the secondary side of the transformer device.

The invention further relates to an apparatus comprising a switched-mode power supply of the type defined in the opening paragraph, for connection to a direct voltage source and for generating at least one regulated d.c. output voltage and comprising at least one device which can at least partly be brought from one operating condition into at least one other operating condition, is brought into a desired given one of its operating conditions, which device has a supply input to which the regulated d.c. output voltage generated by the switched-mode power supply is applied.

A switched-mode power supply of the type defined in the opening paragraph is known, for example from a video recorder marketed by the Applicant under the type designation VR 722. In this known switched-mode power supply the undervoltage detection device for detecting an undervoltage across the direct voltage source comprises a detection circuit for detecting a decrease of the amplitude of the at least one regulated d.c. output voltage generated by means of the switched-mode power supply, the detection circuit supplying control information signalling an undervoltage across the direct voltage source when said regulated d.c. output voltage decreases below a given threshold value. In the known switched-mode power supply this control information is supplied comparatively late, i.e. when the generated regulated d.c. output voltage begins to decrease comparatively distinctly, which occurs at a comparatively late instant owing to the regulation of the generated d.c. output voltage because the regulation attempts to sustain the generated regulated d.c. output voltage uniformly as long as this is possible. However, at the instant at which the detection circuit in the known switched-mode power supply supplies the control information relating to an undervoltage the energy stored in a storage capacitor provided as direct voltage source of the switched-mode power supply at the primary side is comparatively low, as a result of which the energy available across the storage capacitor may no longer be adequate to perform operations to be carried out after an undervoltage has occurred and requiring a comparatively large amount of energy. Consequently, these operations cannot be carried out. To carry out such operations the required energy should then be supplied by other power sources, which would require the use of such additional power sources, leading to additional cost.

It is an object of the invention to mitigate the above problems in a switched-mode power supply of the type defined in the opening paragraph and to construct such a switched-mode power supply in such a manner that the occurrence of an undervoltage across the direct voltage source is detected very rapidly and within such a short time that after expiry of this time the energy stored in the direct voltage source is still adequate to perform operations to be carried out after an undervoltage has occurred and requiring a comparatively large amount of energy. To this end the invention is characterised in that the undervoltage detection device is connected to the secondary side of the transformer device, in that the undervoltage detection device comprises a detection circuit adapted to detect the amplitude of those pulses of the pulse-shaped signal at the secondary side which have a second polarity opposite to the first polarity, and in that the undervoltage detection device further comprises a control signal generator adapted to generate a control signal upon detection that the amplitude of the pulses of the second polarity falls below a threshold value. In this way it is achieved that the pulses of the pulse-shaped signal appearing at the secondary side of the transformer device of the switched-mode power supply, which are not used to derive a regelated d.c. output voltage and which therefore normally remain unused in a switched-mode power supply, are employed to detect the occurrence of an undervoltage. Since said normally unused pulses are not regulated in amplitude and their amplitude value is directly proportional to the voltage across the direct voltage source the amplitude relations for these pulses in the case of an undervoltage will change comparatively rapidly in accordance with the decrease of the voltage across the direct voltage source, the rapid amplitude variation of these pulses enabling the occurrence of an undervoltage to be detected rapidly. The occurrence of an undervoltage can thus be detected within such a short time that in spite of the occurrence of an undervoltage across the direct voltage source the energy stored in the direct voltage source is still adequate to perform operations to be carried out after an undervoltage has occurred and requiring a comparatively large amount of energy, without additional separate power sources being required for this purpose.

In a circuit arrangement in accordance with the invention the detection circuit of the undervoltage detection device may be formed by a comparator having a threshold, which supplies an output pulse each time that the amplitude of the pulse of the second polarity in the pulse-shaped signal at the secondary side of the transformer device exceeds the threshold value, which output pulse is detected by, for example, a microcomputer. When the comparator does not supply any output pulses to the microcomputer this means that an undervoltage occurs, which is detected by means of the microcomputer. However, it has proved to be advantageous if the detection circuit comprises a second rectifier device. This is advantageous in view of a simple construction of the detection circuit of the undervoltage detection device.

It has also proved to be very advantageous if the first rectifier device comprises a half-wave rectifier having a first polarity relative to the secondary side of the transformer device, and the second rectifier device comprises a half-wave rectifier having a polarity opposite to the first polarity relative to the secondary side of the transformer device. This is advantageous for a simple construction of the switched-mode power supply.

It has proved to be particularly advantageous if the first rectifier device comprises a first diode and a first capacitor, which first diode is arranged between the input and the output of the first rectifier device and which first capacitor is arranged between the output of the first rectifier device and a point of constant potential, and the second rectifier device comprises a second diode and a second capacitor, which second diode is arranged between the input and the output of the second rectifier device and which second capacitor is arranged between the output of the second rectifier device and the point of constant potential. This results in a very simple construction of the switched-mode power supply.

Moreover, it has proved to be advantageous if he output of the first rectifier device is coupled to a first input of the control signal generator, and the output of the second rectifier device is coupled to a second input of the control signal generator. In this way it is achieved that the potential value of control signal depends on the potential values at the outputs of the two rectifier devices, which enables the potential of the control signal to be simply brought into a desired range between the two potential values occurring at the outputs of the two rectifier devices.

It has further proved to be advantageous if the control signal generator comprises a first impedance, a second impedance and a transistor, and the first input of the control signal generator is coupled to the control electrode of the transistor via the first impedance and the second input of the control signal generator is coupled to said control electrode via the second impedance, the transistor having a first main electrode coupled to a point of constant potential and a second main electrode to the output of the control signal generator. This results in a very simple practical implementation requiring only a small number of discrete components.

It has also proved to be advantageous if the first main electrode is the emitter of the transistor. Thus, the transistor simply forms a comparator.

According to the invention an apparatus of the type defined in the second paragraph is characterised in that the apparatus comprises a switched-mode power supply as claimed in any one of the preceding Claims, in that the output of the control signal generator of the undervoltage detection device of this switched-mode power supply is coupled to a control input of the at least one device which can at least partly be brought from one operating condition into at least one other operating condition, and this device can be brought into a given one of its operating conditions by means of the energy in the direct voltage source when the control signal appears on the output of the control signal generator. This way ensures that after detection of the occurrence of an undervoltage in an apparatus in accordance with the invention at least one device of the apparatus, which device can at least partly be brought from one operating condition into at least one other operating condition, is brought into a desired given one of its operating conditions, the energy required for this being withdrawn from the direct voltage source which powers the switched-mode power supply of the apparatus.

In an apparatus in accordance with the invention, which is constructed as a recording and/or reproducing apparatus for recording and/or reproducing information signals on/from a record carrier in tape form and which, as a device which can at least partly be brought from one operating condition into at least one other operating condition, comprises an actuating device for applying and lifting a pressure roller to/from a capstan for the record carrier in tape form, which actuating device, in addition to the supply input, to which the regulated d.c. output voltage generated by the switched-mode power supply is applied, has a control signal input, it has proved to be advantageous if the control signal input of the actuating device is coupled to the output of the control signal generator of the undervoltage detection device of the switched-mode power supply, and the actuating device is adapted to lift the pressure roller off the capstan when the control signal appears on the output of the control signal generator of the undervoltage detection device of the switched-mode power supply. This ensures that after the occurrence of an undervoltage across the direct voltage source in such an apparatus the pressure roller is lifted off the capstan by means of the energy stored in the direct voltage source, thereby precluding damage to the pressure roller, the record carrier and the capstan. In an apparatus in accordance with the invention, which is constructed as a recording and/or reproducing apparatus for recording and/or reproducing information signals on/from a record carrier in tape form and which, as a device which can at least partly be brought from one operating condition into at least one other operating condition, comprises a braking device for releasing and braking reel spindles for the drive of the record carrier in tape form, which actuating device, in addition to the supply input, to which the regulated d.c. output voltage generated by the switched-mode power supply is applied, has a control signal input, it has proved to be advantageous if the control signal input of the braking device is coupled to the output of the control signal generator of the undervoltage detection device of the switched-mode power supply, and the braking device is adapted to brake the reel spindles when the control signal appears on the output of the control signal generator of the undervoltage detection device of the switched-mode power supply. This ensures that the braking device for the reel spindles of the apparatus is actuated by means of the residual energy stored in the direct voltage source in order to brake the reel spindles after an undervoltage has occurred across the direct voltage source, thereby precluding looping of the record- carrier tape.

It is to be noted that EP-B1 0,174,677 discloses an apparatus for recording and reproducing signals on/from a magnetic tape, which comprises a servo device which can be brought into at least one other operating condition for the actuation of apparatus parts, such as a magnetic head and a pressure roller, and an undervoltage detection device for the detection of an undervoltage across a direct voltage source, for example in the event of a mains voltage failure. However, EP-B1 0,174,677 does not contain any indication that the known apparatus has a switched-mode power supply, and in the known apparatus the undervoltage detection device is adapted to detect a decrease of a d.c. supply voltage, which in fact corresponds to the known measures in the video recorder VR 722 mentioned in the introduction, and not to detect the decrease of the amplitude of pulses whose amplitude is not regulated, which occur in a switched-mode power supply and which are not used to derive a d.c. output voltage, as is the case in a switched-mode power supply in accordance with the invention and in an apparatus in accordance with the invention provided with such a switched-mode power supply in accordance with the invention.

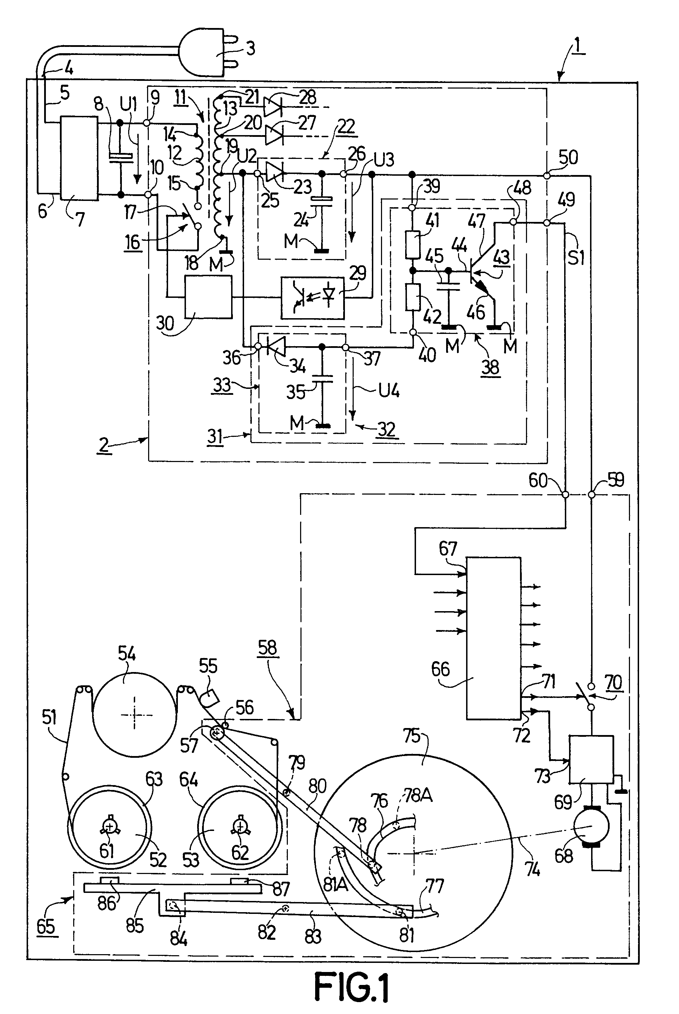

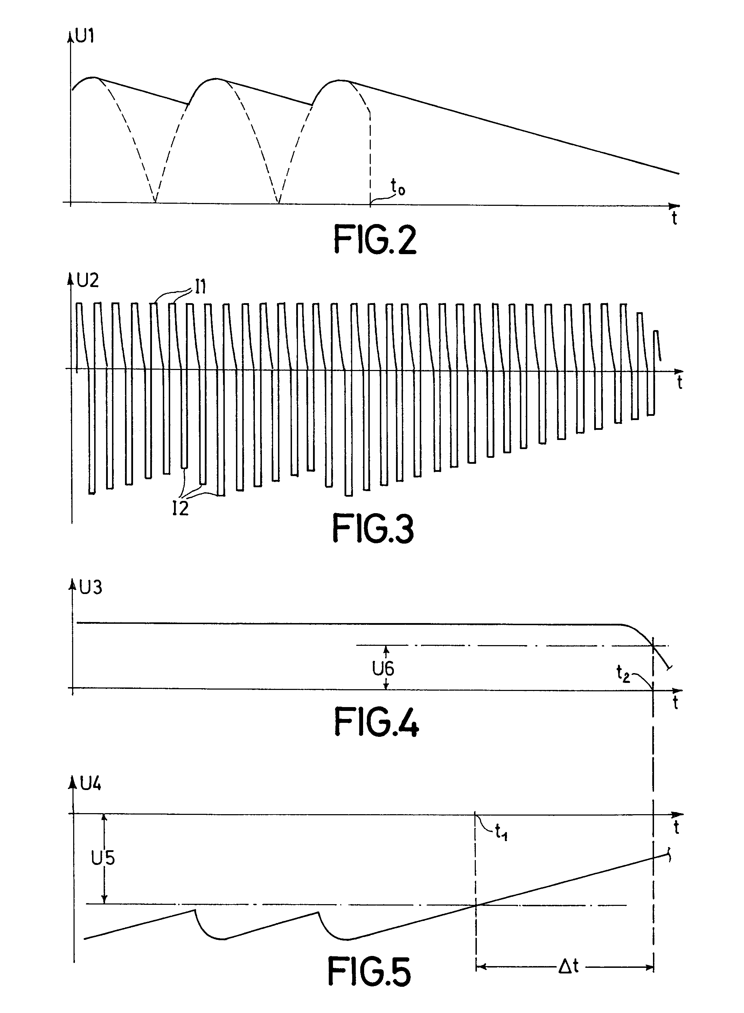

The invention will be described in more detail with reference to an exemplary embodiment which is shown in the drawings but to which the invention is not limited. Fig. 1 shows diagrammatically a video recorder with a switched-mode power supply comprising an undervoltage detection device, with an actuating device for applying and lifting a pressure roller to/from a capstan, and with a braking device for releasing and braking reel spindles. Figures 2, 3, 4 and 5 show signal waveforms of electric signals appearing in the video recorder shown in Fig. 1 and in the switched-mode power supply of this video recorder.

The video recorder 1, which is shown diagrammatically in Fig. 1, has a switched-mode power supply 2 for supplying different direct voltages to various parts of the video recorder 1. The video recorder 1 has a mains lead 4 terminated with a mains plug 3 and having two wires 5 and 6 leading to a mains rectifier 7. A storage capacitor 8 for storing electric energy is connected to the mains rectifier 7, which supplies the voltage U1 having the waveform shown in solid lines in Fig. 2 to this capacitor. The waveform of the rectified a.c. mains voltage is shown in broken lines in Fig. 2. Fig. 2 also indicates a mains voltage failure at the instant to.

The storage capacitor 8 serves as the direct voltage source to which the switched-mode power supply 2 is connected with two input terminals 9 and 10. The switched-mode power supply 2 is adapted to generate three regulated d.c. output voltages, but the description with reference to Fig. 1 only describes the generation of a d.c. output voltage U3.

The switched-mode power supply 2 comprises a transformer device 11 having a primary side 12 and a secondary side 13. The primary side 12 is disposed between two terminals 14 and 15. The terminal 14 is connected to the input terminal 9 of the switched-mode power supply 2. The terminal 15 is arranged in series with an electronic switching device 16, shown diagrammatically in Fig. 1, whose switching state can be controlled via a control input 17 and which is formed, for example, by a switching transistor. The switching device 16 has its end which is remote from the terminal 15 connected to the input terminal 10 of the switched-mode power supply 2.

The secondary side 13 of the transformer device 11 has four terminals 18, 19, 20 and 21. The terminal 18 is connected to a point M of constant potential, i.e. to earth. The terminal 19 is connected to a first rectifier device 22. The first rectifier device 22 comprises a half-wave rectifier formed by a first diode 23 and a first capacitor 24, which diode has a first polarity relative to the secondary side 13 of the transformer device 11. The first diode 23 is arranged between the input 25 and the output 26 of the first rectifier device 22 and the first capacitor 24 is arranged between the output 26 of the first rectifier device 22 and the point M of constant or earth potential.

In the same way as the first diode 23 of the first rectifier device 22 is connected to the terminal 19 of the secondary 13 of the transformer device 11 another diode 27 is connected to the terminal 20 of the secondary side 13 of the transformer device 11 and a further diode 28 is connected to the terminal 21 of the secondary 13 of the transformer device 11. The two diodes 27 and 28 also form part of two further rectifier devices, not shown, and these diodes 27 and 28 each perform the same function as the first diode 23 of the rectifier device 22.

In normal operation of the switched-mode power supply 2 the switching device 16 is controlled so as to be switched on and off with a switching frequency in a range between 30 and 100 kHz. When the switching device 16 is switched on a current can flow from the storage capacitor 8 via the primary 12 of the transformer device 11. A voltage U2 appearing between the terminal 19 and the terminal 18 of the secondary 13 of the transformer device 11 then assumes a negative value proportional to the voltage U1 across the storage capacitor 8. However, no charging current will then flow into then first capacitor 24 through the secondary 13 via the first diode 23 so that energy is stored in the transformer device 11. When the switching device 16 is subsequently switched off no more current can flow through the primary 12 of the transformer device 11. The voltage U2 between the two terminals 19 and 18 then becomes positive and, consequently, a charging current will flow into the first capacitor 24 via the first diode 23, the transformer device 11 then releasing the previously stored energy. When the switching device 16 is closed again the above cycle is repeated.

This results in a pulse-shaped signal across the secondary 13 of the transformer device 11, which signal depends on the switching action of the switching device 16 and whose component U2, which occurs between the two terminals 19 and 18 of the secondary 13, is shown diagrammatically in Fig. 3. As is apparent, this pulse-shaped signal which depends on the switching action of the switching device 16 comprises pulses 11 and 12 of opposite polarity relative to a constant potential, i.e. earth potential, of which the pulses 11 of a first polarity, i.e. the positive polarity, are rectified in the first rectifier device 22 in order to form the regulated d.c. output voltage U3. The d.c. output voltage U3 is applied to a control device 30 to control the switching action of the switching device 16 via an optocoupler 29 provided for potential isolation. As is customary in such switched-mode power supplies, the present control device 30 is constructed in such a manner that as the output voltage U3 increases the control device changes the switching frequency of the switching device 16, i.e. the duty cycle between the switching states of the switching device 16, in such a way that the changed switching action of the switching device 16 causes the regulated d.c. output voltage U3 to decrease, the construction being chosen in such a manner that in normal operation of the switched-mode power supply 2 a regulated output voltage U3 of substantially constant level is obtained, as is shown in Fig. 4.

The switched-mode power supply 2 further includes an undervoltage detection device 31 connected to a point of the power supply 2 which is situated at the secondary side of the transformer device 11. As is apparent from Fig. 1, this undervoltage detection device 31 is connected to the secondary 13 of the transformer device 11, i.e. to the terminal 19 of the secondary 13 of the transformer device 11. The undervoltage detection device 31 comprises a detection circuit 32 adapted to detect the amplitude of those pulses 12 of the pulse-shaped signal U2 appearing at the secondary side, which have a second polarity, i.e. a negative polarity, opposite to the first polarity, i.e. the positive polarity. The detection circuit 32 of the undervoltage detection device 31 comprises a second rectifier device 33. The second rectifier device 33 comprises a half-wave rectifier formed by a second diode 34 and a first capacitor 35, which second diode has a polarity opposite to the first polarity of the first diode 23 relative to the secondary side 13 of the transformer device 11. The second diode 34 is arranged between the input 36 and the output 37 of the second rectifier device 3. The second capacitor 35 is arranged between the output 37 of the second rectifier device 33 and the point M of constant or earth potential.

The second rectifier device 33 rectifies the pulses 12 of negative polarity in such a manner that a varying voltage U4 as shown in Fig. 5 is obtained on the output 37 of the second rectifier device 33. The voltage U4 on the output 37 of the rectifier device 33 follows the variation of the amplitude of the negative pulses 12 in the pulse-shaped signal U2 and, as a consequence, the variation of the voltage U1 across the storage capacitor 8, which supplies power to the switched-mode power supply 2. The fact that the voltage U4 can follow the variation of the voltage U1 across the storage capacitor 8 is achieved by suitably dimensioning the second rectifier device 33 as regards the time constant of the second rectifier device 33, which is determined by its components. In a manner as described hereinbefore the second rectifier device 33 forms a detection circuit for detecting the amplitude of the negative pulses 12 on the pulse-shaped signal U2 appearing between the terminals 19 and 18 at the secondary side 13 of the transformer device 11.

With respect to the first rectifier device 22 it is to be noted that the time constant of this first rectifier device 22 is selected so as to minimise the residual ripple in the regulated d.c. output voltage U3 at the output 26 of the second rectifier device 22.

The undervoltage detection device 31 further comprises a control signal generator 38 adapted to generate a control signal S1 upon detection that the amplitude of the pulses 12 of the second polarity falls below a threshold value. In Fig. 5 a dash-dot line U5 represents this threshold value in relation to the output signal U4 of the second rectifier device 33 provided as the detection circuit.

As is apparent from Fig. 1, the output 26 of the first rectifier device 22 is coupled to a first input 39 of the control signal generator 38 and the output of the second rectifier device 33 is coupled to a second input 40 of the control signal generator 38. The control signal generator 38 comprises a first impedance 41, a second impedance 42 and a transistor 43. The control signal generator 38 has its first input 39 coupled to the control electrode 44 of the transistor 43 via the first impedance 41 and has its second input 40 coupled to this control electrode via the second impedance 42. A capacitor 45 is arranged between the control electrode 44 of the transistor 43 and earth M. A first main electrode 46 of the transistor 43, i.e. the emitter, is coupled to a point of constant potential, i.e. to earth M. A second main electrode 47 of the transistor 43, i.e. the collector, is coupled to the output 48 of the control signal generator 38. The output 48 of the control signal generator 38 is connected to an output 49 of the switched-mode power supply 2, on which this power supply 2 produces the control signal S1, which can generated by means of the control signal generator 38 of the undervoltage detection device 31 of the switched-mode power supply 2.

In normal operation of the switched-mode power supply 2 the regulated positive d.c. output voltage U3 generated by means of the rectifier device 22 of the switched-mode power supply 2 is applied to the first input 39 of the control signal generator 38 and the negative voltage U4 generated by means of the second rectifier device 33 is applied to the second input 40 of the control signal generator 38. As long as the negative voltage U4 is sufficiently negative the transistor 43 remains cut off, so that a high potential value appears at the output 48 of the control signal generator 38 and hence on the control signal output 49 of the switched-mode power supply 2. When it is assumed that a mains voltage failure occurs at the instant to, as is indicated in Fig. 2, the negative voltage U4 at the output of the second rectifier device 33 will vary in accordance with the variation of the voltage U1 across the storage capacitor 8, whereas owing to the regulating action of the switched-mode power supply 2 the amplitude of the regulated d.c. output voltage U3 at the output of the first rectifier device 22 will initially remain unchanged. As soon as the negative voltage U4 reaches or falls below the threshold value U5 the transistor 43 will be turned on, as a result of which a lower potential value occurs at the output 48 of the control signal generator 38 and hence at the control signal output 49 of the switched-mode power supply 2. The transition from the high potential value to the low potential value at the control signal output 49 of the switched-mode power supply 2 and the low potential value appearing at this control signal output 49 after this transition form the control signal S1. It is to be noted that the threshold value U5 is obtained by suitably dimensioning the impedances 41 and 42. To enable the threshold value U5 to be adjusted the two impedances 41 and 42 may be formed by means of an adjustable potentiometer.

Moreover, it is to be noted that the output 26 of the first rectifier device 22 is connected to a supply output 50 of the switched-mode power supply 2, on which output the regelated d.c. output voltage U3 generated by the switched-mode power supply 2 is available to power devices of the video recorder 1 by means of this voltage U3.

The video recorder 1 is intended for recording and reproducing picture signals and sound signals on/from a magnetic tape 51. The magnetic tape 51 is accommodated in a cassette, not shown in Fig. 1, which cassette can be loaded into the video recorder 1. The magnetic tape 51 extends between two tape reels 52 and 53, the magnetic tape 51 being wrapped around a drum-shaped scanning device 54 by means of two movable tape guides and being guided past a stationary magnetic head 55 and a capstan 56. The magnetic tape 51 can be pressed against the capstan 56 by means of a movable pressure roller 57.

To apply the pressure roller 57 to and lift it off the capstan 56 the video recorder 1 comprises an actuating device 58, which is powered by means of the regulated d.c. output voltage U3 generated by the switched-mode power supply 2 in that the supply output 50 of the switched-mode power supply 2 is connected to the supply input 59 of the actuating device 58. In addition to the supply input 59, to which the regulated d.c. output voltage U3 generated by the switched-mode power supply 2 is applied, the actuating device 58 has a control signal input 60. This control signal input 60 of the actuating device 58 is connected to the output 48 of the control signal generator 38 of the undervoltage detection device 31 of the switched-mode power supply 2 via the control signal output 49 of the switched-mode power supply 2.

To drive the two tape reels 52 and 53 and hence the magnetic tape 51 the video recorder 1 has two reel spindles 61 and 62, which are each coaxially connected to a reel disc 63 and 64, respectively. To release and brake the reel discs 63 and 64 and hence the reel spindles 61 and 62 the video recorder 1 comprises a movable braking device 65.

The braking device 65 and the actuating device 58 have a substantial number of common parts. A microcomputer 66 is associated with both the actuating device 58 and the braking device 65. The microcomputer 66 has an input 67 at which it can receive the control signal S1 produced on the output 48 of the control signal generator 38, via the control signal output 49 of the switched-mode power supply 2 and via the control signal input 60 which may be assumed to be common to both devices 58 and 65. Moreover, a drive motor 68 is associated with the control devices 58 and 65, which motor is connected to a motor control device 69 by means of which it can be energised and can be driven selectively in one of two opposite directions of rotation. To start the motor 68 there is provided a controllable switching device 70, which is connected to the supply input 59, which is also associated with both devices 58 and 65, and to the motor control device 69. The switching state of the switching device 70 can be controlled by means of a control signal which can be produced by the microcomputer 66 on its output 71. The direction of rotation of the drive motor 68 can be selected by means of a control signal which can be produced on a further output 72 of the microcomputer 66 and which can be applied to a control input 73 of the motor control device 69. The drive motor 68 drives a control disc 75 via a drive connection 74 which is shown diagrammatically in dash-dot lines, which control disc is common to the actuating device 58 and to the braking device 65.

The control disc 75 has a plurality of control grooves, of which two control grooves 76 and 77 are partly shown diagrammatically in Fig. 1. The control groove 76 belongs to the actuating device 58. The groove 76 is engaged by a pin 78 which projects from an actuating lever 80, which is pivotable about a pivot 79. The pressure roller 57 is rotatably mounted on the actuating lever 80 at its end which is remote from the pin 78. The control groove 77 belongs to the braking device 65. The control groove 77 is engaged by a pin 81, which projects from a further actuating lever 83, which is pivotable about a pivot 82. At its end which is remote from the pin 81 the actuating lever 83 is coupled to a brake-shoe support 85 via a hinged joint 84. The brake-shoe support 85 is movable to and fro substantially transversely of its longitudinal direction and carries two brake shoes 86 and 87 adapted to cooperate with the two reel discs 63 and 64.

Fig. 1 shows a situation in which the pressure roller 57 is pressed against the capstan 56 and in which the brake shoes 86 and 87 are disengaged from the two reel discs 63 and 64. By rotating the control disc 75 anti-clockwise, as viewed in Fig. 1, into a position in which the pins 78 and 81 occupy the positions 78A and 81A in Fig. 1 relative to the control grooves 76 and 77 the actuating lever 80 of the actuating device 58 and the actuating lever 83 of the braking device 65 are actuated in such a manner that the pressure roller 57 is lifted off the capstan 56 and the brake shoes 86 and 87 are pressed against the reel discs 63 and 64. For this rotation of the control disc 75 the drive motor 68 should be energised for only a comparatively short time.

When the undervoltage detection device 31 in a video recorder as shown in Fig. 1 detects an undervoltage across the direct voltage source powering the switched-mode power supply 2 and formed by the storage capacitor 8, which detection occurs for example when the mains plug 3 is erroneously or inadvertently disconnected from the mains, the switched-mode power supply 2 will already produce a control signal S1 on its control signal output 49 at a comparatively early instant tᵢ , as is indicated in Fig. 5, which signal is applied to the microcomputer 66 of the two devices 58 and 65 via the control signal input 60. The control signal S1 is then supplied at the instant ti a time interval At before the instant t₂ in Fig. 4, at which the regulated d.c. output voltage U3 generated by the switched-mode power supply 2 decreases comparatively distinctly, because owing to the energy stored in the storage capacitor 8 and the control action of the switched-mode power supply 2 the decrease of the regulated d.c. output voltage U3 occurs shifted by the time At relative to the instant ti at which the control signal S1 is supplied. Therefore, the control signal S1 reaches the microcomputer 66 at an instant at which the storage capacitor 8 still stores a comparatively large amount of energy. After receipt of the control signal S1 the microcomputer 66 almost immediately produces control signals at its outputs 71 and 72 to control the switching device 70 and the motor control device 69, so that the drive motor 68 is connected to the d.c. output voltage U3 which is still delivered with an unchanged amplitude by the switched-mode power supply 2. Since at this instant the energy stored in the storage capacitor 8 is still adequate the drive motor 68 is driven briefly by this energy stored in the storage capacitor 8 in spite of the fact that the mains voltage failure has already occurred, the drive motor 68 rotating the control disc 75 into that position in which, via the control grooves 76 and 77, the actuating levers 80 and 83 of the actuating device 58 and the braking device 65 have been set to those operating conditions in which the pressure roller 57 is clear of the capstan 56 and the brake shoes 86 and 87 are applied to the reel discs 63 and 64. In this way it is achieved that in the event of a mains voltage failure the movable parts of the actuating device 58 and the braking device 65 are actuated by means of the energy still stored in the storage capacitor 8 after this mains voltage failure, which precludes damage to the pressure roller 56, the magnetic tape 51 and the capstan 56 and looping of the magnetic tape 51.

The invention is not limited to the exemplary embodiment described in the foregoing. The invention can also be applied to a switched-mode power supply in which the direct voltage source powering the power supply is not formed by a storage capacitor energised by a mains rectifier but by at least one battery or at least one rechargeable accumulator. Upon detection that the battery voltage has decreased below a given threshold value the energy still stored in the batteries provided for power supply can then be used to actuate movable parts of an apparatus using such a switched-mode power supply with a very early undervoltage detection. The invention can be used not only in video recorders but also in other apparatuses. The invention can also be used, for example, in magnetic- tape apparatuses for recording and reproducing sound signals or digital data. Moreover, it is possible to use the invention in recording and reproducing apparatuses for disc-shaped record carriers which can be scanned magnetically or optically. In addition, the invention can also be used in electronic printers and facsimile apparatuses including such printers, for example, in order to reset a pushbutton to a standby position after a mains voltage failure.

## Claims

1. A switched-mode power supply for connection to a direct voltage source and for generating at least one regulated d.c. output voltage, comprising a transformer device having a primary side and a secondary side, which primary side is connectible to the direct voltage source and is arranged in series with a switching device, and to which secondary side at least a first rectifier device is connected, a pulse-shaped signal appearing across the secondary side, which signal depends on the switching action of the switching device and contains pulses of opposite polarities relative to a constant potential, of which the pulses of a first polarity are rectified in the first rectifier device to form the regulated d.c. output voltage, which is applied to a control device to control the switching action of the switching device, the switched-mode power supply also comprising an undervoltage detection device connected to a point of the power supply which is situated at the secondary side of the transformer device, characterised in that the undervoltage detection device is connected to the secondary side of the transformer device, in that the undervoltage detection device comprises a detection circuit adapted to detect the amplitude of those pulses of the pulse-shaped signal at the secondary side which have a second polarity opposite to the first polarity, and in that the undervoltage detection device further comprises a control signal generator adapted to generate a control signal upon detection that the amplitude of the pulses of the second polarity falls below a threshold value.

2. A switched-mode power supply as claimed in Claim 1, characterised in that the detection circuit comprises a second rectifier device.

3. A switched-mode power supply as claimed in Claim 2, characterised in that the first rectifier device comprises a half-wave rectifier having a first polarity relative to the secondary side of the transformer device, and in that the second rectifier device comprises a half-wave rectifier having a polarity opposite to the first polarity relative to the secondary side of the transformer device.

4. A switched-mode power supply as claimed in Claim 3, characterised in that the first rectifier device comprises a first diode and a first capacitor, which first diode is arranged between the input and the output of the first rectifier device and which first capacitor is arranged between the output of the first rectifier device and a point of constant potential, and in that the second rectifier device comprises a second diode and a second capacitor, which second diode is arranged between the input and the output of the second rectifier device and which second capacitor is arranged between the output of the second rectifier device and the point of constant potential.

5. A switched-mode power supply as claimed in Claim 4, characterised in that the output of the first rectifier device is coupled to a first input of the control signal generator, and in that the output of the second rectifier device is coupled to a second input of the control signal generator.

6. A switched-mode power supply as claimed in Claim 5, characterised in that the control signal generator comprises a first impedance, a second impedance and a transistor, and in that the first input of the control signal generator is coupled to the control electrode of the transistor via the first impedance and the second input of the control signal generator is coupled to said control electrode via the second impedance, the transistor having a first main electrode coupled to a point of constant potential and a second main electrode to the output of the control signal generator.

7. A switched-mode power supply as claimed in Claim 6, characterised in that the first main electrode is the emitter of the transistor.

8. An apparatus comprising a switched-mode power supply for connection to a direct voltage source and for generating at least one regulated d.c. output voltage and comprising at least one device which can at least partly be brought from one operating condition into at least one other operating condition, is brought into a desired given one of its operating conditions, which device has a supply input to which the regulated d.c. output voltage generated by the switched-mode power supply is applied, characterised in that the apparatus comprises a switched-mode power supply as claimed in any one of the preceding Claims, in that the output of the control signal generator of the undervoltage detection device of this switched-mode power supply is coupled to a control input of the at least one device which can at least partly be brought from one operating condition into at least one other operating condition, and in that this device can be brought into a given one of its operating conditions by means of the energy in the direct voltage source when the control signal appears on the output of the control signal generator.

9. An apparatus as claimed in Claim 8, which is constructed as a recording and/or reproducing apparatus for recording and/or reproducing information signals on/from a record carrier in tape form and which, as a device which can at least partly be brought from one operating condition into at least one other operating condition, comprises an actuating device for applying and lifting a pressure roller to/from a capstan for the record carrier in tape form, which actuating device, in addition to the supply input, to which the regulated d.c. output voltage generated by the switched-mode power supply is applied, has a control signal input, characterised in that the control signal input of the actuating device is coupled to the output of the control signal generator of the undervoltage detection device of the switched-mode power supply, and in that the actuating device is adapted to lift the pressure roller off the capstan when the control signal appears on the output of the control signal generator of the undervoltage detection device of the switched-mode power supply.

10. An apparatus as claimed in Claim 8, which is constructed as a recording and/or reproducing apparatus for recording and/or reproducing information signals on/from a record carrier in tape form and which, as a device which can at least partly be brought from one operating condition into at least one other operating condition, comprises a braking device for releasing and braking reel spindles for the drive of the record carrier in tape form, which actuating device, in addition to the supply input, to which the regulated d.c. output voltage generated by the switched-mode power supply is applied, has a control signal input, characterised in that the control signal input of the braking device is coupled to the output of the control signal generator of the undervoltage detection device of the switched-mode power supply, and in that the braking device is adapted to brake the reel spindles when the control signal appears on the output of the control signal generator of the undervoltage detection device of the switched-mode power supply.
